# EUROPÄISCHE PATENTSCHRIFT

(11) **EP 3 273 027 B1**
(45) Veröffentlichungstag und Bekanntmachung des Hinweises auf die Patenterteilung: **13.03.2019**
(21) Anmeldenummer: 17180975.9
(22) Anmeldetag: 12.07.2017
(51) Int. Cl.: F01N 3/021, F01N 3/10, F01N 13/00, F01N 13/08, F01N 13/10, F01N 13/14, F01N 13/18, F16L 41/00, G01L 19/00

(54) **STUTZENBAUGRUPPE, INSBESONDERE FÜR EINE ABGASBEHANDLUNGSANORDNUNG EINER ABGASANLAGE EINER BRENNKRAFTMASCHINE**
SUPPORT ASSEMBLY, IN PARTICULAR FOR AN EXHAUST GAS TREATMENT DEVICE OF AN EXHAUST GAS SYSTEM OF A COMBUSTION ENGINE
MODULE DE SUPPORT EN PARTICULIER POUR UNE INSTALLATION DE TRAITEMENT DE GAZ D'ÉCHAPPEMENT D'UNE INSTALLATION DE GAZ D'ÉCHAPPEMENT D'UN MOTEUR À COMBUSTION INTERNE

(30) Priorität: 19.07.2016 DE 102016113231
(43) Veröffentlichungstag der Anmeldung: 24.01.2018
(73) Patentinhaber: Eberspächer Exhaust Technology GmbH & Co. KG, 66539 Neunkirchen (DE)
(72) Erfinder: Liu, Dan, 73728 Esslingen (DE); Kast, Peter, 73732 Esslingen (DE)
(74) Vertreter: Ruttensperger Lachnit Trossin Gomoll

(56) Entgegenhaltungen:
- EP-A1- 1 012 591
- EP-A1- 1 911 945
- EP-A2- 0 722 040
- DE-A1- 3 722 369
- DE-A1- 10 346 205
- DE-A1-102005 061 145
- US-A- 5 143 410

## Beschreibung

Die vorliegende Erfindung betrifft eine Abgasbehandlungsanordnung einer Abgasanlage einer Brennkraftmaschine, umfassend einen Stutzen mit einem Sockelbereich zur Festlegung des Stutzens an einer Trägerbaugruppe

Bei beispielsweise in Kraftfahrzeugen eingesetzten Abgasanlagen von Brennkraftmaschinen werden zur Abgasbehandlung verschiedene Baugruppen, wie z.B. Katalysatoren und Partikelfilter, eingesetzt. Um derartige Baugruppen vor Umgebungseinflüssen zu schützen bzw. sie thermisch zu isolieren, ist es bekannt, ein im Allgemeinen aus Blechmaterial aufgebautes Gehäuse derselben an seiner Außenseite mit einer Umkleidungsanordnung zu umkleiden. Eine derartige Umkleidungsanordnung kann beispielsweise faserartiges Isoliermaterial umfassen, welches einerseits an der Außenseite des Gehäuses anliegt und andererseits an seiner nach außen freiliegenden Oberfläche durch ein weiteres, eine Schutzmaterialanlage bereitstellendes Blechgehäuse umgeben ist.

Um über die in derartigen Abgasbehandlungsanordnungen vorhandenen Zustände Informationen sammeln zu können, beispielsweise die Temperatur im Inneren einer derartigen Abgasbehandlungsanordnung erfassen zu können oder Information über die Abgaszusammensetzung bereitstellen zu können, ist es bekannt, an einem Gehäuse einer derartigen Anordnung einen oder mehrere Stutzen vorzusehen, über welche Zugriff zum Inneren des Gehäuses besteht und an welchen jeweils eine Messsonde, wie z.B. ein Temperatursensor oder ein Abgassensor, angebracht werden kann. In dem Bereich, in welchem ein derartiger Stutzen am Gehäuse einer Abgasbehandlungsanordnung festgelegt bzw. festzulegen ist, muss die das Gehäuse überdeckende Umkleidungsanordnung eine für den Durchgriff des Stutzens durch die Umkleidungsanordnung hindurch geeignete Aussparung aufweisen. Im Bereich einer derartigen Aussparung besteht im Allgemeinen ein spaltartiger Zwischenraum zwischen dem Stutzen und einem Randbereich der Umkleidungsanordnung, so dass in diesem Bereich das Gehäuse der Abgasbehandlungsanordnung nach außen hin nicht durch die Umkleidungsanordnung überdeckt ist.

Aus der EP 0 722 040 A2 ist eine Abgasanlage einer Brennkraftmaschine bekannt, bei welcher zwischen Abgasrohren eine in Form einer Katalysatoranordnung ausgebildete Abgasbehandlungsanordnung vorgesehen ist. Ein von einem Auslasskrümmer der Brennkraftmaschine zu der Abgasbehandlungsanordnung führendes Abgasrohr ist doppelwandig ausgebildet mit einem inneren Rohr, einem davon beanstandeten äußeren Rohr und einer Wärmeisolierungslage zwischen dem inneren Rohr und dem äußeren Rohr. Im Bereich einer in dem Abgasrohr gebildeten Öffnung ist ein Stutzen durch Verschweißung mit dem äußeren Rohr des Abgasrohrs fest und abgasdicht verbunden.

Aus der US 5 143 410 A ist ein Abzweigverbinder für eine Kraftstoffleitung bekannt. An der Kraftstoffleitung ist ein Stutzen festgelegt, mit welchem eine ein Abzweigrohr im Bereich einer Abzweigöffnung gegen das Kraftstoffrohr pressende Befestigungsmutter zusammenwirkt.

Die DE 37 22 369 A1 offenbart ein Abgasrohr, an dessen Außenseite ein Stutzen zur Aufnahme einer Lambdasonde festgelegt ist. Der Stutzen ist an seiner Außenseite von einer thermischen Isolierung umgeben, welche wiederum von einem Blechmantel umhüllt ist

Die EP 1 012 591 A1 offenbart ein Abgasrohr einer Abgasanlage für eine Brennkraftmaschine, an welchem im Bereich einer Öffnung in der Rohrwandung ein Stutzen zur Aufnahme eines Messfühlers durch Verschweißen festgelegt ist. Eine den Stutzen außen umgreifende Befestigungsmutter hält den in den Stutzen eingreifend positionierten Messfühler am Stutzen fest.

Die DE 103 46 205 A1 offenbart ein Rohr, an dessen Rohrwandung im Bereich einer darin vorgesehenen Öffnung eine Schnellbefestigung für einen Messfühler angeordnet ist. Ein erstes Teil der Schnellbefestigung ist an der Rohrwandung durch Verschweißen festgelegt. Ein mit dem ersten Teil durch Bajonettverbindung in Eingriff bringbares zweites Teil der Schnellbefestigung übergreift im Montagezustand den Messfühler und hält diesen über das erste Teil am Rohr fest.

Die DE 10 2005 061 145 A1 offenbart ein Abgasrohr, an welchem im Bereich eines seitlich davon abstehenden Flansches ein Stutzen zur Aufnahme eines Dosierventils vorgesehen ist.

Die EP 1 911 945 A1 offenbart ein Abgassystem für ein Motorrad bei welchem an einem Abgasschalldämpfer ein von diesem nach außen vorstehendendes Auslassrohr festgelegt ist. In dem das Auslassrohr tragenden Bereich ist der Schalldämpfer an seiner Außenseite mit einer Kunststoffabdeckung verkleidet.

Es ist die Aufgabe der vorliegenden Erfindung eine mit wenigstens einer Stutzenbaugruppe ausgestattete Abgasbehandlungsanordnung bereitzustellen, bei welcher in einfacher Weise die Möglichkeit der Überdeckung eines einen Stutzen umgebenden Bereichs einer den Stutzen tragenden Trägerbaugruppe bereitgestellt ist.

Erfindungsgemäß wird diese Aufgabe gelöst durch eine Abgasbehandlungsanordnung für eine Abgasanlage einer Brennkraftmaschine insbesondere Katalysatoranordnung, umfassend ein Anordnungsgehäuse, eine das Anordnungsgehäuse an seiner Außenseite wenigstens bereichsweise, vorzugsweise wenigstens an einem Außenumfangsbereich im Wesentlichen vollständig überdeckende Umkleidungsanordnung sowie wenigstens eine Stutzenbaugruppe.

Die Stutzenbaugruppe umfasst einen Stutzen mit einem Sockelbereich zur Festlegung des Stutzens an einer durch das Anordnungsgehäuse bereitgestellten Trägerbaugruppe sowie ein über eine Außenseite des Stutzens hervorstehendes Abdeckelement.

Der Stutzen wenigstens einer, vorzugsweise jeder Stutzenbaugruppe ist in einem von der Umkleidungsanordnung nicht überdeckten Montagebereich des Anordnungsgehäuses an dem Anordnungsgehäuse festgelegt und das Abdeckelement dieser Stutzenbaugruppe übergreift die Umkleidungsanordnung in ihrem an den Montagebereich angrenzenden Randbereich wenigstens bereichsweise.

Bei der erfindungsgemäß aufgebauten Abgasbehandlungsanordnung stellt die Stutzenbaugruppe mit ihrem Abdeckelement selbst die technische Maßnahme bereit, welche dafür sorgt, dass ein den Stutzen umgebender Bereich der den Stutzen tragenden Trägerbaugruppe nach außen hin überdeckt ist. Es besteht somit nicht in die Gefahr, dass von außen Partikel auf diesen den Stutzen umgebenden Bereich der Trägerbaugruppe gelangen. Insbesondere ist dann, wenn eine derartige Trägerbaugruppe beispielsweise ein Katalysator einer Abgasanlage ist, dessen Gehäuse im Betrieb eine vergleichsweise hohe Temperatur aufweist, die Gefahr, dass leicht entflammbare Materialien, wie zum Beispiel Kraftstoffspritzer, auf das Gehäuse auftreffen und sich entzünden können, beseitigt. Gleichzeitig wird durch die Abdeckung des den Stutzen umgebenden Bereichs der Trägerbaugruppe diese in diesem Bereich gegen Wärmeverlust abgeschirmt.

Zur Festlegung des Abdeckelements bezüglich des Stutzens wird vorgeschlagen, dass das Abdeckelement einen Befestigungsbereich aufweist.

Um den den Stutzen umgebenden Bereich der Trägerbaugruppe gegebenenfalls in Zusammenwirkung mit einer diese überdeckenden Umkleidungsanordnung zuverlässig nach außen hin abschirmen zu können, wird weiter vorgeschlagen, dass das Abdeckelement einen ausgehend vom Befestigungsbereich in Richtung vom Stutzen weg sich erstreckenden Übergriffsbereich oder/und einen in Richtung auf den Sockelbereich zu sich erstreckenden Abschirmbereich aufweist.

Dabei kann zur Verbesserung der Abschirmfunktionalität des Abdeckelements vorgesehen sein, dass der Abschirmbereich in Abstand vom Befestigungsbereich sich ausgehend vom Übergriffsbereich erstreckt.

Eine stabile Befestigung des Abdeckelements am Stutzen kann beispielsweise dadurch gewährleistet werden, dass der Befestigungsbereich hülsenartig ausgebildet ist und den Stutzen an seiner Außenseite übergreift. Insbesondere kann dabei vorgesehen sein, dass der Befestigungsbereich mit einer Innengewindeformation ausgebildet ist zum Befestigungseingriff mit einer an der Außenseite des Stutzens vorgesehenen Außengewindeformation. Das Abdeckelement kann somit einfach durch Aufschrauben auf den Stutzen an diesem festgelegt werden und in seine für die Abschirmung am besten geeignete Positionierung in einer Richtung entlang des Stutzens gebracht werden.

Bei einer alternativen Ausgestaltungsart wird zur stabilen Festlegung des Abdeckelements bezüglich des Stutzens vorgeschlagen, dass der Befestigungsbereich ringscheibenartig ausgebildet ist. Bei dieser Ausgestaltung kann der Befestigungsbereich zwischen dem Stutzen und einer daran getragenen Baugruppe gehalten, also beispielsweise geklemmt werden und somit nicht nur eine Funktionalität zum Befestigen des Abdeckelement bereitstellen, sondern auch die Funktionalität einer zwischen dem Stutzen und der daran zu tragenden Baugruppe vorzusehenden Dichtscheibe erfüllen.

Alternativ oder zusätzlich zu den vorangehend beschriebenen Maßnahmen zum Festlegen des Abdeckelements am Stutzen kann vorgesehen sein, dass das Abdeckelement am Stutzen materialschlüssig, vorzugsweise durch Verschweißen, Verlöten oder Verkleben, festgelegt ist.

Zur Befestigung einer an dem Stutzen zu tragenden Baugruppe an diesem wird vorgeschlagen, dass der Stutzen eine vorzugsweise mit einer Innengewindeformation ausgebildete Stutzenöffnung zur Aufnahme der an dem Stutzen zu tragenden Baugruppe, vorzugsweise Messsonde, aufweist.

Um insbesondere dann, wenn die Befestigung des Abdeckelements an dem Stutzen über miteinander in Eingriff zu bringenden Gewindeformationen erfolgt, diesen Gewindeeingriff in einfacher Weise herstellen bzw. auch lösen zu können, wird vorgeschlagen, dass an dem Abdeckelement eine Werkzeugeingriffsformation, vorzugsweise Außenvielkant, vorgesehen ist.

Um die Abgasbehandlungsanordnung thermisch zu isolieren bzw. gegen Umgebungseinflüsse schützen zu können, wird vorgeschlagen, dass die Umkleidungsanordnung wenigstens eine das Anordnungsgehäuse an seiner Außenseite wenigstens bereichsweise überdeckende Umkleidungsmateriallage und wenigstens eine die wenigstens eine Umkleidungsmateriallage an ihrer von der Außenseite des Anordnungsgehäuses abgewandten Seite wenigstens bereichsweise überdeckende Schutzmateriallage umfasst. Dabei kann zum Bereitstellen einer weiter optimierten Abschirmwechselwirkung mit dem Abdeckelement wenigstens einer Stutzenbaugruppe vorgesehen sein, dass wenigstens eine Schutzmaterialanlage in dem an den Montagebereich angrenzenden Randbereich der Umkleidungsanordnung mit einem Randabschnitt sich über wenigstens eine Umkleidungsmateriallage hinaus auf den Stutzen zu oder/und sich in Richtung von der Außenseite des Anordnungsgehäuses weg erstreckt.

In Wechselwirkung mit dem Randabschnitt wenigstens einer Schutzmateriallage kann gemäß einem besonders vorteilhaften Aspekt des erfindungsgemäßen Aufbaus bei wenigstens einer, vorzugsweise jeder Stutzenbaugruppe das Abdeckelement den Randabschnitt in Richtung vom Stutzen weg übergreifen oder/und an seiner vom Stutzen abgewandten Seite in Richtung auf die Außenseite des Anordnungsgehäuse zu überlappen. Auf diese Art und Weise kann in Zusammenwirkung mit dem Randabschnitt das Abdeckelement eine Labyrinthdichtung gegen den Eintritt von Materialien in den Montagebereich bereitstellen.

Um das Entstehen von Geräuschen zu vermeiden, wird vorgeschlagen, dass bei wenigstens einer, vorzugsweise jeder Stutzenbaugruppe das Abdeckelement die Umkleidungsanordnung nicht berührt.

Bei einer hinsichtlich des Aufbaus besonders einfach zu realisierenden Ausgestaltungsform kann vorgesehen sein, dass bei wenigstens einer, vorzugsweise jeder Stutzenbaugruppe der Befestigungsbereich des Abdeckelements zwischen dem Stutzen und einer an dem Stutzen getragenen Baugruppe gehalten ist.

Um eine insbesondere hitzebeständige und abgasdichte Halterung am Anordnungsgehäuse zu gewährleisten, wird vorgeschlagen, dass bei wenigstens einer, vorzugsweise jeder Stutzenbaugruppe der Stutzen mit seinem Sockelbereich am Anordnungsgehäuse materialschlüssig, vorzugsweise durch Verschweißung oder Verlötung, festgelegt ist.

Um die beispielsweise für einen Katalysatorbetrieb erforderliche Betriebstemperatur aufrechterhalten zu können, wird vorgeschlagen, dass wenigstens eine, vorzugsweise jede Umkleidungsmateriallage mit Fasermaterial, vorzugsweise Keramikfasermaterial, aufgebaut ist.

Ein zuverlässiger Schutz der Umkleidungsmateriallage/n nach außen hin kann beispielsweise dadurch gewährleistet werden, dass wenigstens eine, vorzugsweise jede Schutzmaterialanlage mit Blechmaterial aufgebaut ist.

Um in einem jeweiligen Montagebereich den Durchgriff eines Stutzens durch die Umkleidungsanordnung gewährleisten zu können, ansonsten aber eine möglichst großflächige Überdeckung des Anordnungsgehäuses erreichen zu können, wird vorgeschlagen, dass in wenigstens einem, vorzugsweise jedem Montagebereich die Umkleidungsanordnung eine lochartige Aussparung aufweist.

Die vorliegende Erfindung wird nachfolgend mit Bezug auf die beiliegenden Figuren detailliert beschrieben. Es zeigt:
- Fig. 1: eine Teil-Schnitt Darstellung einer Abgasbehandlungsanordnung mit einer daran vorgesehenen Stutzenbaugruppe;
- Fig. 2: eine Draufsicht auf die Stutzenbaugruppe der Fig. 1 in Blickrichtung II in Fig. 1;
- Fig. 3: eine der Fig. 1 entsprechende Darstellung mit einer alternativen Ausgestaltungsart der Stutzenbaugruppe;
- Fig. 4: eine Draufsicht auf die Stutzenbaugruppe der Fig. 3 in Blickrichtung IV in Fig. 3;
- Fig. 5: eine weitere der Fig. 1 entsprechende Darstellung mit einer alternativen Ausgestaltungsart der Stutzenbaugruppe.

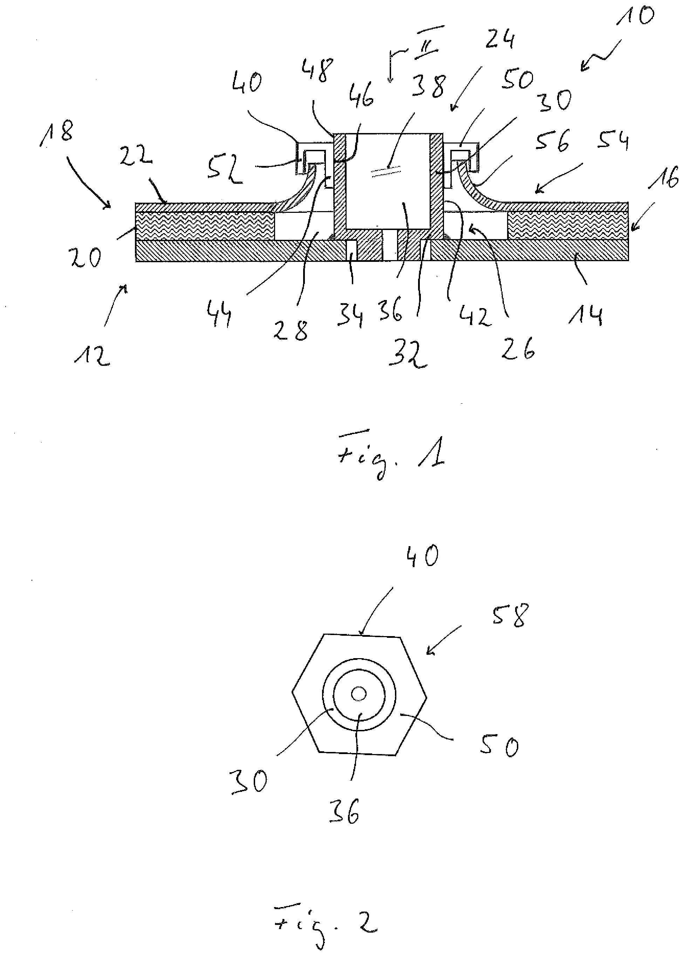

In Fig. 1 ist ein Teilbereich einer allgemein mit 10 bezeichneten Abgasbehandlungsanordnung im Schnitt dargestellt. Die Abgasbehandlungsanordnung 10 umfasst ein Anordnungsgehäuse 12, von welchem in Fig. 1 ein Teilbereich einer Umfangswandung 14 dargestellt ist. In dem von der Umfangswandung 14 bzw. der Gehäuseanordnung 12 umgebenen Innenraum der Abgasbehandlungsanordnung 10 ist beispielsweise dann, wenn die Abgasbehandlungsanordnung 10 ein Katalysator ist, das in Wechselwirkung mit dem das Anordnungsgehäuse 12 durchströmenden Abgas tretende Katalysatormaterial getragen.

An einer Außenseite 16 des Anordnungsgehäuse 12 bzw. der Umfangswandung 14 desselben ist eine allgemein mit 18 bezeichnete Umkleidungsanordnung vorgesehen. Diese umfasst im dargestellten Beispiel eine Umkleidungsmateriallage 20, die beispielsweise aus Fasermaterial, wie z. B. Keramikfasermaterial, aufgebaut ist. An ihrer von der Außenseite 16 abgewandten Seite ist die Umkleidungsmateriallage 20 von einer Schutzmateriallage 22 umgeben. Diese ist vorzugsweise aus Blechmaterial aufgebaut und schützt die Umkleidungsmateriallage gegen äußere Einflüsse bzw. hält diese stabil an der Außenseite 16 des Anordnungsgehäuses 12.

Um eine vollständige Umkapselung des Anordnungsgehäuses 12 und dementsprechend auch eine vollständige thermische Isolation desselben zu erlangen, überdeckt die Umkleidungsanordnung 18 im Wesentlichen die gesamte Außenseite 16 des Anordnungsgehäuses 12, zumindest aber die Außenseite der Umfangswandung 14 des Anordnungsgehäuses 12.

Um Information beispielsweise über die Temperatur oder die Abgaszusammensetzung im Inneren des Anordnungsgehäuses 12 zu erlangen, ist an dem eine Trägerbaugruppe bereitstellenden Anordnungsgehäuse 12 eine allgemein mit 24 bezeichnete Stutzenbaugruppe vorgesehen, an welcher eine Messsonde, beispielsweise Temperatursensor oder Abgassensor, angebracht werden kann. In dem Bereich, in welchem die Stutzenbaugruppe 24 am Anordnungsgehäuse 12, insbesondere der Umfangswandung 14 desselben, festzulegen ist, hier allgemein als Montagebereich 26 bezeichnet, weist die Umkleidungsanordnung 18 eine lochartige Aussparung 28 auf, durch welche die Stutzenbaugruppe 24 bzw. ein Stutzen 30 derselben hindurchgreift. Mit einem Sockelbereich 32 ist der Stutzen 30 am Anordnungsgehäuse 12 beispielsweise durch Verschweißung festgelegt. Im Montagebereich 26 weist das Anordnungsgehäuse 12 eine Öffnung 34 auf, in welche der Stutzen 30 sich hinein erstrecken kann bzw. über welche der Stutzen 30 zu dem vom Anordnungsgehäuse 12 umgebenen Innenraum der Abgasbehandlungsanordnung 10 offen ist. Der Stutzen 30 weist eine Stutzenöffnung 36 auf, welche beispielsweise mit einer Innengewindeformation 38 ausgebildet sein kann, um eine Messsonde am Stutzen fest verankern zu können.

Um den Montagebereich 26, in welchem das Anordnungsgehäuse 12 zumindest von der Umkleidungsmateriallage 20 nicht überdeckt ist, nach außen hin abzuschirmen, umfasst die Stutzenbaugruppe 24 ein allgemein mit 40 bezeichnetes Abdeckelement. In dem in Fig. 1 dargestellten Ausgestaltungsbeispiel umfasst das Abdeckelement 40 einen eine Außenseite 42 des Stutzens 30 hülsenartig umgreifenden Befestigungsbereich 44, an welchem eine Innengewindeformation 46 zum Gewindeeingriff mit einer an der Außenseite 42 des Stutzens 30 vorgesehenen Außengewindeformation 48 vorgesehen ist, so dass das Abdeckelement 40 mit seinem Befestigungsbereich 44 auf den Stutzen 30 aufgeschraubt werden kann.

An den hülsenartigen Befestigungsbereich 44 schließt ein sich in Richtung vom Stutzen beispielsweise im Wesentlichen orthogonal weg erstreckender Übergriffsbereich 50 an. An dem vom Befestigungsbereich 44 entfernt liegenden Endbereich des Übergriffsbereichs 50 schließt ein beispielsweise im Wesentlichen parallel zum Hülsenbereich 44 in Richtung auf den Sockelbereich 32 des Stutzens 30 zu sich erstreckender Abschirmbereich 52 an. Es ergibt sich somit für das grundsätzlich ringförmig ausgebildete Abdeckelement 40 im Schnitt eine im Wesentlichen L- bzw. U-artige Konfiguration.

In einem an den Montagebereich 26 anschließenden Randbereich 54 der Umkleidungsanordnung 18 erstreckt die Schutzmateriallage 22 mit einem Randabschnitt 56 sich über die Umkleidungsmateriallage 20 hinaus auf den Stutzen 30 zu. In diesem Randabschnitt 56 ist die Schutzmateriallage 22 in Richtung von der Außenseite 16 des Anordnungsgehäuses 12 weg gekrümmt, so dass der Randabschnitt 56 sich einerseits über die Umkleidungsmateriallage 20 hinaus auf den Stutzen 30 zu, gleichzeitig aber auch von der Außenseite 16 des Anordnungsgehäuses 12 weg erstreckt. Wie in Fig. 1 dargestellt, kann dies beispielsweise durch Umbiegen des Randabschnitts 56 erfolgen. Anstelle der in Fig. 1 dargestellten Krümmung mit im Wesentlichen gleichmäßigem Krümmungsradius könnte auch ein abgewinkelter Verlauf des Randabschnitts 56 vorgesehen sein.

Der Randabschnitt 56 erstreckt sich bis in den vom Übergriffsbereich 50 und vom Abschirmbereich 52 umgebenen Innenbereich des Abdeckelements 40. Dieses übergreift somit mit seinem Übergriffsbereich 50 den Randabschnitt 56 in einer Richtung vom Stutzen 30 weg und überlappt mit seinem Abschirmbereich 52 den Randabschnitt 56 an seiner von der Außenseite 42 des Stutzens 30 abgewandten Seite. Somit bildet das Abdeckelement 40 zusammen mit dem Randabschnitt 56 einen Abschluss nach Art einer Labyrinthdichtung, wodurch der Eintritt von Verunreinigungen oder beispielsweise Kraftstoffspritzern in den von der Umkleidungsmateriallage 20 nicht überdeckten Montagebereich 26 verhindert wird.

Bei der Montage der in Fig. 1 dargestellten Abgasbehandlungsanordnung 10 kann, nachdem das Anordnungsgehäuse 12 mit den darin aufzunehmenden Komponenten zusammengesetzt wurde und bereits auch der Stutzen 30 am Anordnungsgehäuse 12 festgelegt wurde, die Umkleidungsanordnung 18 das Anordnungsgehäuse 12 überdeckend angeordnet werden, so dass der Randabschnitt 56 der Schutzmateriallage 20 den Stutzen 30 umgibt. Darauf folgend wird das Abdeckelement 40 auf den Stutzen 30 aufgeschraubt. Dazu kann dieses an seiner vom Stutzen 30 abgewandten Außenseite mit einer in Fig. 2 erkenbaren, beispielsweise als Außensechskant ausgebildeten Werkzeugeingriffsformation 58 ausgebildet sein, also in Draufsicht grundsätzlich eine im Wesentlichen sechseckige bzw. der Geometrie des Außenmehrkants entsprechende Umfangsform aufweisen. Das Abdeckelement 40 kann so weit aufgeschraubt werden, bis der Randabschnitt 56 sich ausreichend mit dem Abschirmbereich 52 überlappt. Dabei ist darauf zu achten, dass ein gegenseitiger Kontakt zwischen dem Abdeckelement 40 und dem Randabschnitt 56, welcher zu durch Vibrationen hervorgerufenen Geräuschen führen könnte, vermieden wird. In dieser Positionierung kann das Abdeckelement 40 dann zusätzlich zu dem Gewindeeingriff noch bezüglich des Stutzens 30 verankert werden, beispielsweise durch Verschweißen, Verlöten oder Verkleben. Anstelle des vorangehend beschriebenen Gewindeeingriffs zwischen dem Abdeckelement 40 und dem Stutzen 30 könnte grundsätzlich das Abdeckelement 40 mit seinem beispielsweise hülsenartig ausgebildeten Befestigungsbereich 40 ohne Gewindeeingriff auf den Stutzen 30 aufgeschoben und in die gewünschte Positionierung gebracht und dann durch Materialschluss, also Verschweißen, Verlöten oder Verkleben, am Stutzen 30 festgelegt werden.

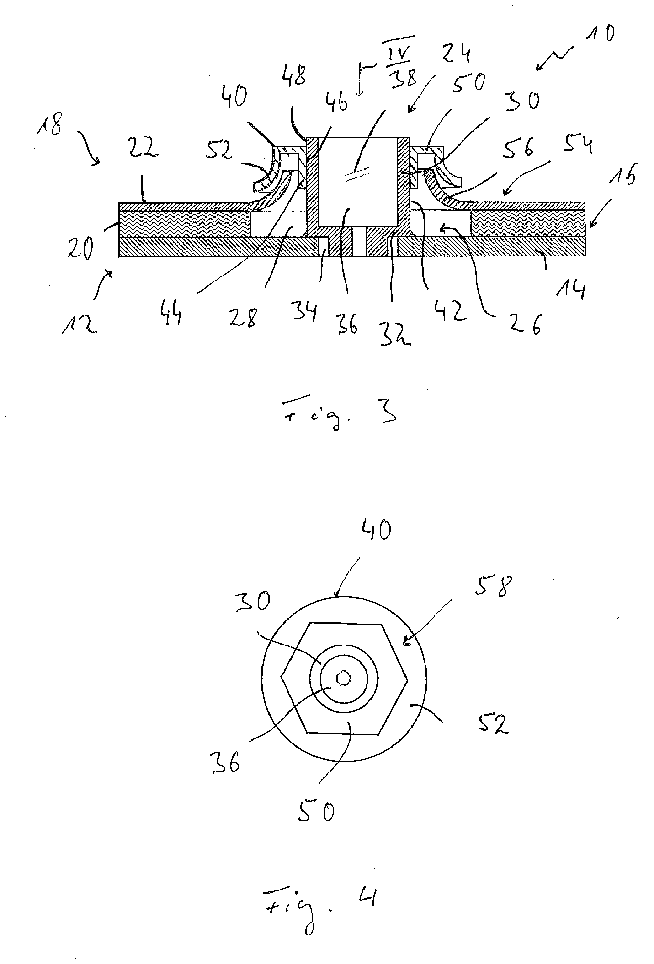

Eine alternative Ausgestaltungsform ist in den Fig. 3 und 4 dargestellt. Diese entspricht weitestgehend der vorangehend mit Bezug auf die Fig. 1 beschriebenen Ausgestaltungsform. Man erkennt jedoch, dass bei dem Abdeckelement 40 der Abschirmbereich 52 nicht wie in der Ausgestaltungsform der Fig. 1 im Wesentlichen zylindrisch ausgebildet ist, sondern sich in Richtung zum Sockelbereich 32 des Stutzens 30 hin glockenartig erweitert. Der Abschirmbereich 52 weist somit eine an die Formgebung des Randabschnitts 56 angepasste Kontur auf, so dass ein noch weitergehender Überlapp zwischen diesen beiden Bereichen mit noch verbesserter Abschirmwirkung erreicht werden kann. Auch bei dieser Ausgestaltung kann das Abdeckelement 40 beispielsweise durch Gewindeeingriff am Stutzen 30 festgelegt werden. Zu diesem Zwecke weist das Abdeckelement 40 zumindest in dem an dem Übergriffsbereich 50 anschießenden Bereich des Abschirmbereichs 52 die Formgebung einer Werkzeugeingriffsformation 58, beispielsweise wiederum Außensechskant, auf. Anschließend an diesen Bereich erweitert sich dann der Abschirmbereich 52 in Richtung zum Sockelbereich 32 hin.

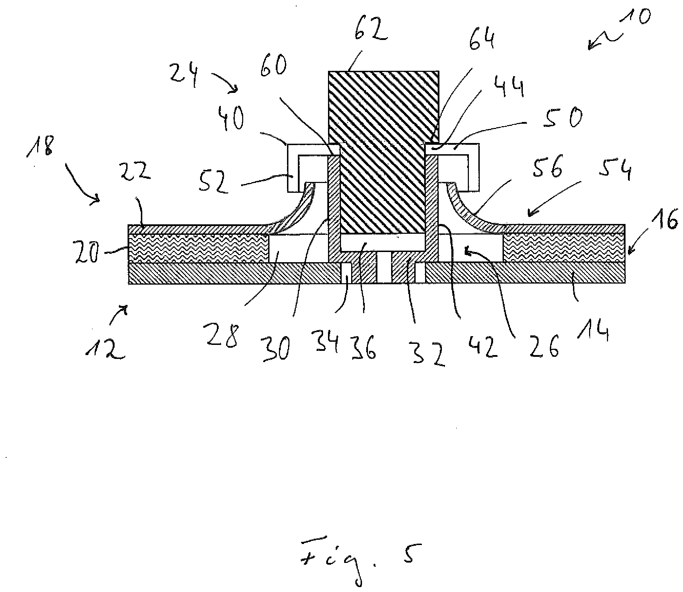

Eine weitere alternative Ausgestaltungsform ist in Fig. 5 dargestellt. Bei dieser Ausgestaltungsform ist das Abdeckelement 40 so gestaltet, dass der Befestigungsbereich 44 ringscheibenartig ausgebildet ist, beispielsweise den ebenfalls ringscheibenartig ausgebildeten Übergriffsbereich 50 in Richtung auf den Stutzen 30 zu verlängert. Der Befestigungsbereich 44 ist so dimensioniert bzw. positioniert, dass er eine vom Sockelbereich 32 abgewandt orientierte Stirnseite 60 des Stutzens 30 überdeckt bzw. daran anliegt.

Eine in die Stutzenöffnung 36 eingesetzte und beispielsweise darin durch Gewindeeingriff gehaltene Messsonde 62 übergreift mit einer Schulter 64 den Befestigungsbereich 44 bzw. auch die Stirnseite 60 des Stutzens 30, so dass der Befestigungsbereich 44 zwischen der Stirnseite 30 und der Schulter 64 der Messsonde 62 fest gehalten bzw. geklemmt ist. Auf diese Art und Weise kann einerseits das Abdeckelement 40 fest bezüglich des Stutzens 30 gehalten werden. Andererseits kann das Abdeckelement 40 mit seinem Befestigungsbereich 44 gleichzeitig auch die Funktion einer zwischen dem Stutzen 30 und der Messsonde 62 ohnehin vorzusehenden Dichtscheibe erfüllen.

Mit seinem Übergriffsbereich 50 und seinem Abschirmbereich 52 bildet das Abdeckelement 40 zusammen mit dem Randabschnitt 56 der Schutzmateriallage 22 wieder die vorangehend mit Bezug auf die Fig. 1 bereits erläuterte labyrinthdichtungsartige Konfiguration, so dass der Montagebereich 26 einerseits zuverlässig gegen das Eindringen von Material von außen abgedeckt ist, andererseits gleichzeitig auch gegen Wärmeverlust nach außen abgeschirmt ist.

Es sei darauf hingewiesen, dass selbstverständlich bei der Ausgestaltungsform der Fig. 5 der Abschirmbereich 52 auch die in Fig. 3 dargestellte Geometrie aufweisen könnte. Auch ist darauf hinzuweisen, dass bei einer Abgasbehandlungsanordnung 10 mehrere derartige Stutzenanordnungen 24 vorgesehen sein können, beispielsweise dann, wenn durch verschiedene Messsonden verschiedene Parameter zu erfassen sind. Dabei können die verschiedenen Stutzenanordnungen 24 zueinander identisch ausgebildet sein, können aber auch verschiedener Bauart sein. Ferner könnte bei einer alternativen Ausgestaltung die Schutzmateriallage in größerem Abstand vom Stutzen von der Umkleidungsmateriallage weggeführt sein und sich in Richtung von der Außenseite des Anordnungsgehäuses weg erstrecken, so dass die Umkleidungsmateriallage sich noch näher an den Stutzen heran erstrecken kann. Um den vorangehend beschriebenen Übergriff zu gewährleisten, kann dann beispielsweise der Übergriffsbereich 50 eine größere Erstreckungslänge aufweisen, so dass gleichwohl der Übergriff bzw. Überlapp mit dem vom Anordnungsgehäuse weg sich erstreckenden Randabschnitt der Schutzmateriallage gewährleistet ist. Ferner könnte der Abschirmbereich 52 des Abdeckelements 40 sich ausgehend vom Befestigungsbereich 44 schräg in Richtung auf den Sockelbereich 32 zu und von der Außenseite 42 des Stutzens 30 weg erstrecken, so dass eine im Schnitt näherungsweise V-artige Konfiguration des Abdeckelements 40 vorliegt, in welche der Randabschnitt 56 eingreifen kann. Bei dieser Ausgestaltung wird auf den im Wesentlichen senkrecht von der Außenseite 42 sich weg erstreckenden Übergriffsbereich verzichtet bzw. dieser Übergriffsbereich wird durch den Abschirmbereich 52 mit bereitgestellt.

## Patentansprüche

1. Abgasbehandlungsanordnung für eine Abgasanlage einer Brennkraftmaschine, umfassend ein Anordnungsgehäuse (12), eine das Anordnungsgehäuse (12) an seiner Außenseite (16) wenigstens bereichsweise überdeckende Umkleidungsanordnung (18) sowie wenigstens eine Stutzenbaugruppe (24), die Stutzenbaugruppe (24) umfassend einen Stutzen (30) mit einem Sockelbereich (32) zur Festlegung des Stutzens (30) an einer Trägerbaugruppe sowie ein über eine Außenseite (42) des Stutzens (30) hervorstehendes Abdeckelement (40), wobei der Stutzen (30) wenigstens einer Stutzenbaugruppe (24) in einem von der Umkleidungsanordnung (18) nicht überdeckten Montagebereich (26) des Anordnungsgehäuses (12) an dem die Trägerbaugruppe bereitstellenden Anordnungsgehäuse (12) festgelegt ist und das Abdeckelement (30) dieser Stutzenbaugruppe (24) die Umkleidungsanordnung (18) in ihrem an den Montagebereich (26) angrenzenden Randbereich (54) wenigstens bereichsweise übergreift.

2. Abgasbehandlungsanordnung nach Anspruch 1, **dadurch gekennzeichnet, dass** das Abdeckelement (40) einen Befestigungsbereich (44) zur Festlegung bezüglich des Stutzens (30) aufweist.

3. Abgasbehandlungsanordnung nach Anspruch 2, **dadurch gekennzeichnet, dass** das Abdeckelement (40) einen ausgehend vom Befestigungsbereich (44) in Richtung vom Stutzen (30) weg sich erstreckenden Übergriffsbereich (50) oder/und einen in Richtung auf den Sockelbereich (32) zu sich erstreckenden Abschirmbereich (52) aufweist.

4. Abgasbehandlungsanordnung nach Anspruch 3 **dadurch gekennzeichnet, dass** der Abschirmbereich (52) in Abstand vom Befestigungsbereich (44) sich ausgehend vom Übergriffsbereich (50) erstreckt.

5. Abgasbehandlungsanordnung nach einem der Ansprüche 2-4, **dadurch gekennzeichnet, dass** der Befestigungsbereich (44) hülsenartig ausgebildet ist und den Stutzen (30) an seiner Außenseite (42) übergreift.

6. Abgasbehandlungsanordnung nach Anspruch 5, **dadurch gekennzeichnet, dass** der Befestigungsbereich (44) mit einer Innengewindeformation (46) ausgebildet ist zum Befestigungseingriff mit einer an der Außenseite (42) des Stutzens (30) vorgesehenen Außengewindeformation (48).

7. Abgasbehandlungsanordnung nach einem der Ansprüche 2-4, **dadurch gekennzeichnet, dass** der Befestigungsbereich (44) ringscheibenartig ausgebildet ist.

8. Abgasbehandlungsanordnung nach einem der vorangehenden Ansprüche, **dadurch gekennzeichnet, dass** das Abdeckelement (40) am Stutzen (30) materialschlüssig, vorzugsweise durch Verschweißen, Verlöten oder Verkleben, festgelegt ist.

9. Abgasbehandlungsanordnung nach einem der vorangehenden Ansprüche, **dadurch gekennzeichnet, dass** der Stutzen (30) eine vorzugsweise mit einer Innengewindeformation (38) ausgebildete Stutzenöffnung (36) zur Aufnahme einer an dem Stutzen (30) zu tragenden Baugruppe, vorzugsweise Messsonde (62), aufweist, oder/und dass an dem Abdeckelement (40) eine Werkzeugeingriffsformation (58), vorzugsweise Außenvielkant, vorgesehen ist.

10. Abgasbehandlungsanordnung nach einem der vorangehenden Ansprüche, **dadurch gekennzeichnet, dass** die Abgasbehandlungsanordnung eine Katalysatoranordnung ist.

11. Abgasbehandlungsanordnung nach einem der vorangehenden Ansprüche, **dadurch gekennzeichnet, dass** die Umkleidungsanordnung (18) wenigstens eine das Anordnungsgehäuse (12) an seiner Außenseite (16) wenigstens bereichsweise überdeckende Umkleidungsmateriallage (20) und wenigstens eine die wenigstens eine Umkleidungsmateriallage (20) an ihrer von der Außenseite (16) des Anordnungsgehäuses (12) abgewandten Seite wenigstens bereichsweise überdeckende Schutzmateriallage (22) umfasst, wobei wenigstens eine Schutzmaterialanlage (22) in dem an den Montagebereich (26) angrenzenden Randbereich (54) der Umkleidungsanordnung (18) mit einem Randabschnitt (56) sich über wenigstens eine Umkleidungsmateriallage (20) hinaus auf den Stutzen (30) zu oder/und sich in Richtung von der Außenseite (16) des Anordnungsgehäuses (12) weg erstreckt.

12. Abgasbehandlungsanordnung nach Anspruch 11, **dadurch gekennzeichnet, dass** bei wenigstens einer Stutzenbaugruppe (24) das Abdeckelement (40) den Randabschnitt (56) in Richtung vom Stutzen (30) weg übergreift oder/und an seiner vom Stutzen (30) abgewandten Seite in Richtung auf die Außenseite (16) des Anordnungsgehäuse (12) zu überlappt.

13. Abgasbehandlungsanordnung nach einem der Ansprüche 1-12, **dadurch gekennzeichnet, dass** bei wenigstens einer Stutzenbaugruppe (24) das Abdeckelement (30) die Umkleidungsanordnung (18) nicht berührt.

14. Abgasbehandlungsanordnung nach einem der Ansprüche 1-13 und Anspruch 7, **dadurch gekennzeichnet, dass** bei wenigstens einer Stutzenbaugruppe (24) der Befestigungsbereich (44) des Abdeckelements (40) zwischen dem Stutzen (30) und einer an dem Stutzen (30) getragenen Baugruppe gehalten ist.

15. Abgasbehandlungsanordnung nach einen der Ansprüche 1-14, **dadurch gekennzeichnet, dass** bei wenigstens einer Stutzenbaugruppe (34) der Stutzen (30) mit seinem Sockelbereich (32) am Anordnungsgehäuse (12) materialschlüssig, vorzugsweise durch Verschweißung oder Verlötung, festgelegt ist, oder/und dass wenigstens eine Umkleidungsmateriallage (20) mit Fasermaterial, vorzugsweise Keramikfasermaterial, aufgebaut ist, oder/und dass wenigstens eine Schutzmaterialanlage (22) mit Blechmaterial aufgebaut ist, oder/und dass in wenigstens einem Montagebereich (26) die Umkleidungsanordnung (18) eine lochartige Aussparung (28) aufweist.

## Claims

1. Exhaust gas treatment arrangement for an exhaust system of an internal combustion engine, comprising a device housing (12), a covering arrangement (18) overlapping the device housing (12) on its outside (16) in at least some areas as well as at least one connection piece assembly unit (24), wherein the connection piece assembly unit (24) comprises a connection piece (30) with a base area (32) for fixing the connection piece (30) to a carrier assembly unit as well as a covering element (40) protruding over an outside (42) of the connection piece (30) wherein the connection piece (30) of at least one connection piece assembly unit (24) is fixed to the device housing (12) providing the support assembly in a mounting area (26) of the device housing (12), which mounting area is not overlapped by the covering arrangement (18), and wherein the covering element (30) of this connection piece assembly unit (24) overlaps the covering arrangement (18) in at least some areas in its edge area (54) adjacent to the mounting area (26).

2. Exhaust gas treatment arrangement in accordance with claim 1, **characterized in that** the covering element (40) comprises a fastening area (44) for fastening in relation to the connection piece (30).

3. Exhaust gas treatment arrangement in accordance with claim 2, **characterized in that** the covering element (40) comprises an overlapping area (50) extending starting from the fastening area (44) in the direction away from the connection piece (30) or/and a shielding area (52) extending in the direction towards the base area (32).

4. Exhaust gas treatment arrangement in accordance with claim 3, **characterized in that** the shielding area (52) extends starting from the overlapping area (50) at a distance from the fastening area (44).

5. Exhaust gas treatment arrangement in accordance with one of the claims 2-4, **characterized in that** the fastening area (44) has a sleeve-like configuration and overlaps the connection piece (30) on its outside (42).

6. Exhaust gas treatment arrangement in accordance with claim 5, **characterized in that** the fastening area (44) is configured with an internal thread formation (46) for fasteningly meshing with an external thread formation (48) provided on the outside (42) of the connection piece (30).

7. Exhaust gas treatment arrangement in accordance with one of the claims 2-4, **characterized in that** the fastening area (44) has a ring disc-like configuration.

8. Exhaust gas treatment arrangement in accordance with one of the above claims, **characterized in that** the covering element (40) is fixed to the connection piece (30) by means of a connection in substance, preferably by welding, soldering or bonding.

9. Exhaust gas treatment arrangement in accordance with one of the above claims, **characterized in that** the connection piece (30) has a connection piece opening (36), preferably configured with an internal thread formation (38), for receiving an assembly unit to be carried at the connection piece (30), preferably a measuring probe (62), or/and that a tool meshing formation (58), preferably an external polygon, is provided at the covering element (40).

10. Exhaust gas treatment arrangement in accordance with one of the above claims, **characterized in that** the exhaust gas treatment arrangement is a catalyzer arrangement.

11. Exhaust gas treatment arrangement in accordance with one of the above claims, **characterized in that** the covering arrangement (18) comprises at least one layer of covering material (20) overlapping the device housing (12) on its outside (16) in at least some areas and at least one layer of protective material (22) overlapping the at least one layer of covering material (20) in at least some areas on its side facing away from the outside (16) of the device housing (12), wherein at least one layer of protective material (22) in the edge area (54) of the covering arrangement (18), which edge area is adjacent to the mounting area (26), extends with an edge section (56) beyond at least one layer of covering material (20) towards the connection piece (30) or/and in the direction away from the outside (16) of the device housing (12).

12. Exhaust gas treatment arrangement in accordance with claim 11, **characterized in that** in at least one connection piece assembly unit (24), the covering element (40) overlaps the edge section (56) in the direction away from the connection piece (30) or/and overlaps the edge section in the direction towards the outside (16) of the device housing (12) on its side facing away from the connection piece (30).

13. Exhaust gas treatment arrangement in accordance with one of the claims 1-12, **characterized in that** in at least one connection piece assembly unit (24), the covering element (30) is not in contact with the covering arrangement (18).

14. Exhaust gas treatment arrangement in accordance with one of the claims 1-13 and claim 7, **characterized in that** in at least one connection piece assembly unit (24), the fastening area (44) of the covering element (40) is held between the connection piece (30) and an assembly unit carried on the connection piece (30).

15. Exhaust gas treatment arrangement in accordance with one of the claims 1-14, **characterized in that** in at least one connection piece assembly unit (34), the connection piece (30) is fixed with its base area (32) to the device housing (12) by means of a connection in substance, preferably by welding or soldering, or/and that at least one layer of covering material (20) is composed of fiber material, preferably ceramic fiber material, or/and that at least one layer of protective material (22) is composed of sheet metal material, or/and that the covering arrangement (18) has a hole-like opening (28) in at least one mounting area (26).

## Revendications

1. Arrangement de traitement de gaz d'échappement pour un système de gaz d'échappement d'un moteur à combustion interne, comprenant un boîtier de dispositif (12), un arrangement d'enveloppe (18) couvrant le boîtier de dispositif (12) à son extérieur (16) dans au moins quelques régions ainsi qu'au moins un module de pièce de connexion (24), le module de pièce de connexion (24) comprenant une pièce de connexion (30) avec une région de base (32) pour attacher la pièce de connexion (30) a une unité de module de support ainsi qu'un élément de recouvrement (40) faisant saillie au-delà d'un côté extérieur (42) de la pièce de connexion (30), où la pièce de connexion (30) d'au moins un module de pièce de connexion (24) est attachée au boîtier de dispositif (12) qui met à disposition le module de support dans une région de montage (26) du boîtier de dispositif (12) qui n'est pas recouvert par l'arrangement d'enveloppe (18) et où la pièce de connexion (30) de ce module de pièce de connexion (24) recouvre l'arrangement d'enveloppe (18) au moins en partie dans sa région de bord (54) adjacente à la région de montage (26).

2. Arrangement de traitement de gaz d'échappement selon la revendication 1, **caractérisé en ce que** l'élément de recouvrement (40) comprend une région de fixation (44) pour la fixation par rapport à la pièce de connexion (30).

3. Arrangement de traitement de gaz d'échappement selon la revendication 2, **caractérisé en ce que** l'élément de recouvrement (40) comprend une région de recouvrement (50) s'étendant de la région de fixation (44) en s'éloignant de la pièce de connexion (30) ou/et une région de protection (52) s'étendant vers la région de base (32).

4. Arrangement de traitement de gaz d'échappement selon la revendication 3, **caractérisé en ce que** la région de protection (52) s'étend à une distance de la région de fixation (44) partant de la région de recouvrement (50).

5. Arrangement de traitement de gaz d'échappement selon une des revendications 2 à 4, **caractérisé en ce que** la région de fixation (44) est adaptée sous forme de manchon et recouvre la pièce de connexion (30) à son côté extérieur (42).

6. Arrangement de traitement de gaz d'échappement selon la revendication 5, **caractérisé en ce que** la région de fixation (44) est adaptée avec une formation de filetage intérieur (46) pour un engagement de fixation avec une formation de filetage extérieur (48) prévu au côté extérieur (42) de la pièce de connexion (30).

7. Arrangement de traitement de gaz d'échappement selon une des revendications 2 à 4, **caractérisé en ce que** la région de fixation (44) est adaptée sous forme de disque annulaire.

8. Arrangement de traitement de gaz d'échappement selon une des revendications précédentes, **caractérisé en ce que** l'élément de recouvrement (40) est attaché à la pièce de connexion (30) de manière solidaire, de préférence par soudage, brasage ou collage.

9. Arrangement de traitement de gaz d'échappement selon une des revendications précédentes, **caractérisé en ce que** la pièce de connexion (30) comprend une ouverture de pièce de connexion (36) adaptée de préférence avec une formation de filetage intérieur (38) pour recevoir un module à supporter à la pièce de connexion (30), de préférence une sonde de mesure (62) ou/et **en ce qu'**une formation d'engagement d'outil (58), de préférence un membre polygonal mâle, est prévu à l'élément de recouvrement (40).

10. Arrangement de traitement de gaz d'échappement selon une des revendications précédentes, **caractérisé en ce que** l'arrangement de traitement de gaz d'échappement est un arrangement de catalyseur.

11. Arrangement de traitement de gaz d'échappement selon une des revendications précédentes, **caractérisé en ce que** l'arrangement de recouvrement (18) comprend au moins une couche de matériau d'enveloppe (20) recouvrant le boîtier de dispositif (12) au moins partiellement à son côté extérieur (16) et au moins une couche de matériau de protection (22) recouvrant ladite au moins une couche de matériau de recouvrement (20) au moins partiellement à son côté opposé au côté extérieur (16) du boîtier de dispositif (12), où au moins une couche de matériau de protection (22) s'éloigne dans la région de bord (54) adjacente à la région de montage (26) avec une section de bord (56) et s'étend au-delà d'au moins une couche de matériau d'enveloppe (20) dans le sens de la pièce de connexion (30) ou/et s'éloigne du côté extérieur (16) du boîtier de dispositif (12).

12. Arrangement de traitement de gaz d'échappement selon la revendication 11, **caractérisé en ce que** dans au moins un module de pièce de connexion (24) l'élément de recouvrement (40) recouvre la section de bord (56) en s'éloignant de la pièce de connexion (30) ou/et chevauche à son côté opposé à la pièce de connexion (30) dans le sens du côté extérieur (16) du boîtier de dispositif (12).

13. Arrangement de traitement de gaz d'échappement selon une des revendications 1 à 12, **caractérisé en ce que** dans au moins un module de pièce de connexion (24) l'élément de recouvrement (30) ne contacte pas l'arrangement d'enveloppe (18).

14. Arrangement de traitement de gaz d'échappement selon une des revendications 1 à 13 et la revendication 7, **caractérisé en ce que** dans au moins un module de pièce de connexion (24) la région de fixation (44) de l'élément de recouvrement (40) est supporté entre la pièce de connexion (30) et un module supporté à la pièce de connexion (30).

15. Arrangement de traitement de gaz d'échappement selon une des revendications 1 à 14, **caractérisé en ce que** dans au moins un module de pièce de connexion (34) la pièce de connexion (30) est attaché de manière solidaire avec sa région de base (32) au boîtier de dispositif (12), de préférence par soudage ou brasage, et/ou **en ce qu'**au moins une couche de matériau d'enveloppe (20) est formée avec du matériau de fibre, de préférence du matériau de fibre céramique, ou/et **en ce qu'**au moins une couche de matériau de protection (22) est composée de matériau de tôle métallique ou/et **en ce que** l'arrangement d'enveloppe (18) comprend une ouverture en forme de trou (28) dans au moins une région de montage (26).
